# EUROPEAN PATENT SPECIFICATION

(11) **EP 3 506 734 B1**
(45) Date of publication and mention of the grant of the patent: **24.02.2021**
(21) Application number: 17768242.4
(22) Date of filing: 23.08.2017
(51) Int. Cl.: A01G 17/14, A01G 17/10

(54) **SUPPORTING POLE FOR VINEYARDS**
STÜTZPFOSTEN FÜR WEINGÄRTEN
POTEAU DE SUPPORT POUR VIGNOBLES

(30) Priority: 31.08.2016 IT 201600088712
(43) Date of publication of application: 10.07.2019
(73) Proprietor: Mollificio Bortolussi S.R.L., 33080 Fiume Veneto (PN) (IT)
(72) Inventor: BORTOLUSSI, Claudio, 33080 Fiume Veneto (PN) (IT); BORTOLUSSI, Franco, 33080 Fiume Veneto (PN) (IT)
(74) Representative: Giugni, Valter
(86) International application number: PCT/IB2017/055084
(87) International publication number: WO 2018/042289

(56) References cited:
- EP-A1- 1 103 177
- DE-U1-202016 101 163
- FR-A3- 2 552 622
- JP-U- S5 448 843

## Description

### TECHNICAL FIELD OF INVENTION

. The present invention is relative to a vineyard supporting pole, in particular an intermediate pole that is arranged between the two head poles, in between which a wire is stretched for holding up the growing plants.

### PRIOR ART

. With the increasing farm mechanization, vineyards are subjected to more punishing treatments, carried out in particular with grape harvesting machines. These machines shake the branches with a certain force, and therefore the plants must be conveniently supported and trained in their natural growth.

. In short, the layout of a vineyard includes two head poles that are anchored to the ground with cables or metal braces connected to buried plates of metal or cement; between the two head poles is stretched a wire, called carrying wire, which supports and guides the growing grapevines. Each grapevine is held up by a so-called tutor to which is tied the vine stalk.

Poles for supporting grapevines are known from EP 1103177 A1, FR 2552622 A3, DE 202016 101163 U1 and JP S5448843 U, for instance.

. Between the two head poles are also provided intermediate poles, arranged suitably spaced apart from each other, having the purpose of supporting and guiding the carrying wire along which will extend the branches and the canopies of the vines.

. These intermediate poles normally consist of metal section, for example having a T or a C cross section, to which the carrying wire is fastened with ties made of pieces of wire. The branches and the canopies of the grapevines can coil around the the carrying wire and rest on the top end of the intermediate poles.

### TECHNICAL PROBLEM TO SOLVE

. The prior art described above refers in particular to a grapevine layout referred to as free cordon, which has been studied with a view of the mechanized work carried out on the vineyard.

. The most serious problem in a row of grapevines having this structure is found at the top ends of the intermediate poles, where the branches of the grapevine tend in time to develop a phenomenon defined as "embedment". This phenomenon consists of a progressive embedding to a certain depth of the end of the pole into the wooden body of the branch, and is due to the fact that the end surface of the pole has a limited extent. Moreover, the end of the pole has a rough and irregular finish, as it is a metal section that does not require a specific finishing machining.

### SUMMARY OF THE INVENTION

. The objective of the invention is achieved with a pole for supporting a grapevine, whose characteristics are defined in independent claim 1 of the present patent. Further details are disclosed in the dependent sub claims.

**.** Characteristics and advantages of the invention will become evident from the description which follows, by way of example without limitations, with reference to the enclosed drawings, wherein:
- Fig. 1 illustrates schematically a row of grapevines in a vineyard;
- Fig. 2 illustrates, in a perspective view, an intermediate vineyard support pole of Fig. 1, according to the prior art;
- Fig. 3 illustrates, in a perspective view, an intermediate vineyard support pole of Fig. 1, according to the present invention;
- Fig. 4 illustrates, in partial cross section, a detail of the pole of Fig. 3, and
- Fig. 5 illustrates, I a perspective view, the pole of Fig. 3, on which is supported a part of the plant.

### DETAILED DESCRIPTION OF THE INVENTION

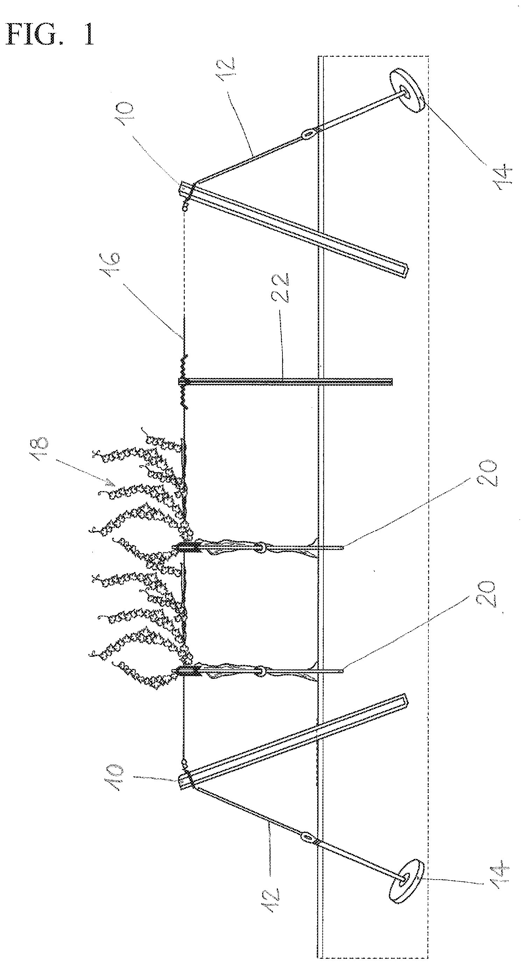

**.** Fig. 1 illustrates schematically a row of grapevines in a vineyard.

**.** Substantially, the vine row consists of two head poles 10, that are anchored to the ground by means of cables, or metal braces, 12 connected to buried plates 14 made of metal or cement. Between the two head poles 10 is stretched a wire 16, referred to as carrying wire. The carrying wire 16 must hold up and guide the plants 18 during their growth. Each grapevine is supported by a tutor 20 to which the stalk of the vine.

.Between the two head poles 10 are also provided a plurality of intermediate poles 22 (only one is shown in the figure), arranged suitably spaced apart, whose purpose is to hold up and guide the carrying wire 16, along which are trained the branches and the canopies of the grapevines.

.The intermediate poles 22 are normally made with metal sections, for example with a T or C cross section, which are driven into the ground and to which the carrying wire 16 is normally fastened with ties consisting of pieces of wire.

.As shown in Fig. 1, the branches of the grapevines can entwine around the carrying wire, and eventually they grow until they rest on the top end of the intermediate poles 22.

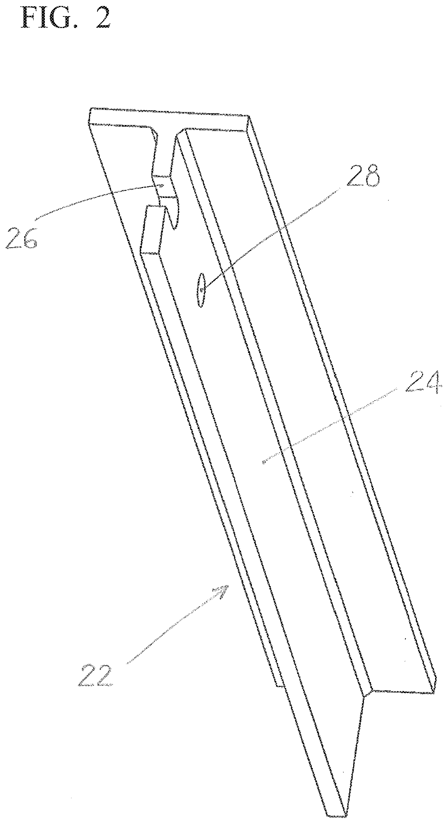

**.** Fig. 2 illustrates, in a perspective view, an intermediate pole 22 for supporting the vineyard of Fig. 1, according to the prior art.

.The intermediate pole 22, in the specific example, is a metal section with a T-shaped cross section, in which the wing 24 orthogonal in the direction of extension of the carrying wire 16 has its upper end provided with a notch 26 to hold and guide the carrying wire 16. Further, the wing 24 of the intermediate pole 22 is provided with a through hole 28 which holds the fastening member used to tie the carrying wire 16 to the intermediate pole 22. The through hole 28 is provided in a suitable position below the notch 26.

.As already mentioned, the drawback of this type of pole lies in the fact that the grapevine on a traditional T-shaped pole tends to "embed", that is, incorporate in its stalk the upper metal part of the support.

.This situation occurs due to the following reasons:
- The stable part (about 20 years) of the grapevine (horizontal stalk) is tied very firmly, being wound and entwined around the carrying wire, an important requirement to mechanize the various processes, like pruning, harvesting, etc.
- The weight of the whole: stalk-vegetation-fruit (grapes).
- Mechanical actions such as shaking, vibrations, etc., carried out during the various processes.
- Very small cross section of the upper part of the intermediate support pole, which supports the whole at that height above the ground.

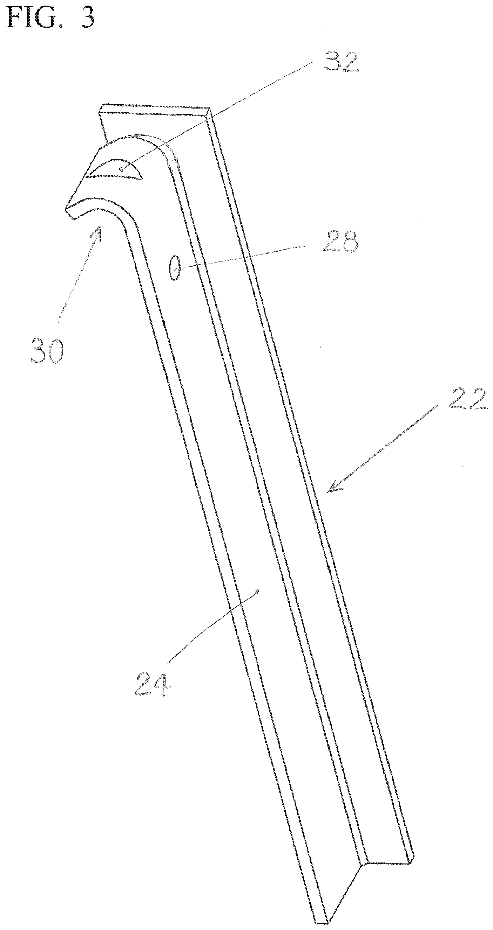

**.** Fig. 3 illustrates, in perspective, an intermediate pole 22, according to the invention; numerical references corresponding to the ones of the prior-art pole are maintained in the description of the pole of the present invention.

**.** In this case too, the pole 22 consists of a T-shaped metal section, but in this case the wing 24, which is orthogonal to the direction of extension of the carrying wire, has a curved upper end 30. In this manner, the upper end 30 presents to the growing branches of the vine a substantially smooth support surface that is much wider, thus avoiding the risk of the support becoming embedded in the wooden part of the plant.

.To guarantee in any case the guide of the carrying wire 16, the surface of the upper end 30 of the pole 22 is still provided with a notch 32 aligned with the direction of extension of the carrying wire.

.The wing 24 of the T-shaped section is also provided with a through hole 28 for engaging the member 34 for fastening the carrying wire to the intermediate pole 22.

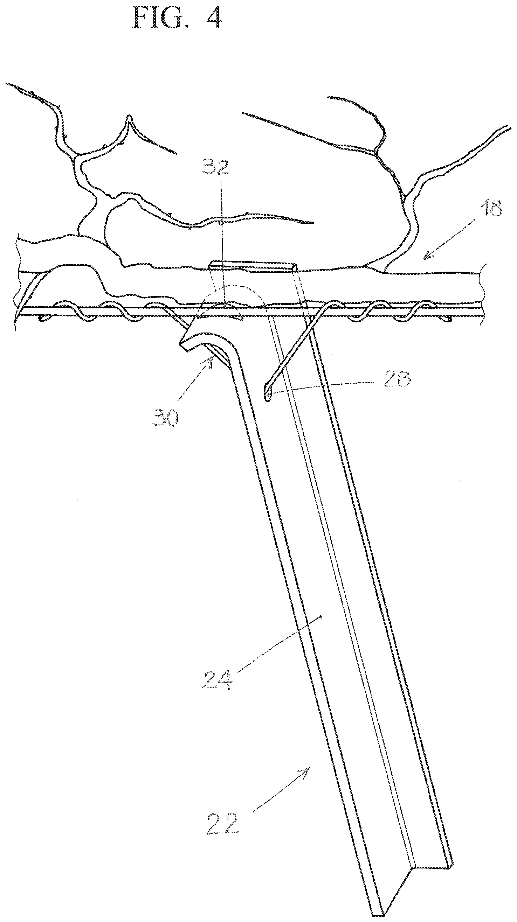

**.** Fig. 4 illustrates, in partial cross section, a detail of the intermediate pole 22 viewed in the direction of extension of the carrying wire 16.

.As can be seen, thanks to its curvature, the upper end of the wing 24 is perfectly adapted to guide the carrying wire 16 by means of the notch 32, and also provides a surface that is effectively smooth for supporting the branches 18 of the grapevine.

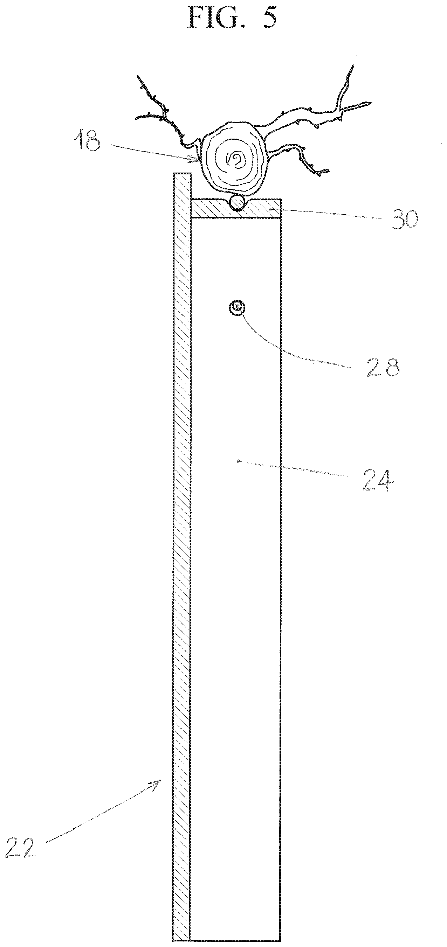

**.** Fig. 5 illustrates in a perspective view the pole of Fig. 3, on which is supported a part of the grapevine 18. The innovative solution thus appears as particularly simple and effective for solving the technical problem indicated above.

## Claims

1. Intermediate pole for supporting a grapevine, arranged between two head poles (10) between which a wire (16) is stretched in order to hold up the plants, said intermediate pole being made by a metal section having its lower end driven into the ground,
the upper end of the intermediate pole (22) has a sliding surface for bearing the plants, the sliding surface being furrowed by a groove (32) within which the wire (16) holding the plant is held, **characterized in that** the pole is made by a T-shaped metal section (22), the upper end (30) of one of its two wings (24) being curved and forming the sliding surface for holding the plant.

2. Intermediate pole for supporting a grapevine according to claim 1, wherein the wing (24) of the T-shaped metal section (22), which is provided with the curved upper end (30), is further provided with a through hole (28) wherein a fastening member (34) for the supporting wire (16) is engaged with the pole.

3. Intermediate pole for supporting a grapevine according to claim 2, wherein the through hole (28) in which the fastening member (34) of the supporting wire (16) is engaged, is accomplished at a position spaced lower as regards to the curved end (30) of the wing (24) of the T-shaped metal section (22).

## Patentansprüche

1. Zwischenpfahl zum Tragen einer Weinrebe, angeordnet zwischen zwei Kopfpfählen (10), zwischen denen ein Draht (16) gespannt ist, um die Pflanzen oben zu halten, wobei der Zwischenpfahl aus einem Metallprofil besteht, dessen unteres Ende in den Boden getrieben ist, und das obere Ende des Zwischenpfahls (22) eine Gleitfläche zum Tragen der Pflanzen aufweist,
die Gleitfläche von einer Rille (32) durchzogen ist, in der der Draht (16) aufgenommen ist, der die Pflanze hält,
**dadurch gekennzeichnet, dass**
der Pfahl aus einem T-förmigen Metallprofil (22) besteht, wobei das obere Ende (30) eines seiner zwei Schenkel (24) gekrümmt ist und die Gleitfläche zum Halten der Pflanze bildet.

2. Zwischenpfahl zum Tragen einer Weinrebe nach Anspruch 1, wobei der Schenkel (24) des T-förmigen Metallprofils (22), der mit dem gekrümmten oberen Ende (30) versehen ist, des Weiteren mit einem Durchgangsloch (28) versehen ist, in dem ein Befestigungselement (34) für den Tragedraht (16) mit dem Pfahl in Eingriff ist.

3. Zwischenpfahl zum Tragen einer Weinrebe nach Anspruch 2, wobei das Durchgangsloch (28), in dem das Befestigungselement (34) des Tragedrahtes (16) in Eingriff ist, an einer Position ausgebildet ist, die in Bezug auf das gekrümmte Ende (30) des Schenkels (24) des T-förmigen Metallprofils (22) weiter nach unten beabstandet ist.

## Revendications

1. Poteau intermédiaire destiné à supporter une vigne, disposé entre deux piquets de tête (10) entre lesquels est tendu un fil (16) afin de maintenir les plantes, ledit poteau intermédiaire étant constitué par un profilé métallique dont l'extrémité inférieure est enfoncée dans le sol,
l'extrémité supérieure du poteau intermédiaire (22) présente une surface de glissement destinée à porter les plantes, la surface de glissement étant sillonnée par une rainure (32) dans laquelle est maintenu le fil (16) portant la plante, **caractérisé en ce que** le poteau est constitué par une section métallique (22) en forme de T, l'extrémité supérieure (30) de l'une de ses deux ailes (24) étant courbée et formant la surface de glissement destinée à porter la plante.

2. Poteau intermédiaire pour supporter une vigne selon la revendication 1, dans lequel l'aile (24) de la section métallique (22) en forme de T, qui est munie de l'extrémité supérieure (30) courbée, est en outre munie d'un trou traversant (28) dans lequel un élément de fixation (34) pour le fil (16) de support est engagé avec le poteau.

3. Poteau intermédiaire pour supporter une vigne selon la revendication 2, dans lequel le trou traversant (28) dans lequel l'élément de fixation (34) du fil (16) de support est engagé, est réalisé à une position espacée plus basse par rapport à l'extrémité courbée (30) de l'aile (24) de la section métallique (22) en forme de T.
